# EUROPEAN PATENT SPECIFICATION

(11) **EP 3 807 519 B1**
(45) Date of publication and mention of the grant of the patent: **19.04.2023**
(21) Application number: 19732894.1
(22) Date of filing: 14.06.2019
(51) Int. Cl.: F03D 1/02, F03D 13/20, F03D 80/50

(54) **A MULTIROTOR WIND TURBINE**
WINDTURBINE MIT MEHREREN ROTOREN
ÉOLIENNE À ROTORS MULTIPLES

(30) Priority: 15.06.2018 DK PA201870408
(43) Date of publication of application: 21.04.2021
(73) Proprietor: VESTAS WIND SYSTEMS A/S, 8200 Aarhus N (DK)
(72) Inventor: BAUN, Torben Ladegaard, 8541 Skødstrup (DK); NEUBAUER, Jesper Lykkegaard, 8543 Hornslet (DK)
(74) Representative: Vestas Patents Department
(86) International application number: PCT/DK2019/050190
(87) International publication number: WO 2019/238194

(56) References cited:
- WO-A1-2010/098813
- WO-A1-2017/178026
- WO-A2-2011/137903
- DE-C1- 10 013 442
- GB-A- 2 443 886

## Description

### INTRODUCTI ON

The disclosure relates to a multirotor wind turbine comprising a tower extending in a vertical direction from a tower bottom to a tower top. The wind turbine further comprises a load carrying structure extending transverse to the vertical direction and arranged to carry at least two energy generating units, the load carrying structure being carried rotationally by the tower via a yaw arrangement.

### BACKGROUND OF THE INVENTION

Wind turbines normally comprise one or more energy generating units, each energy generating unit comprising a load carrying hub carrying one or more wind turbine blades. The wind acts on the wind turbine blades, thereby causing the load carrying hub to rotate. The rotational movements of the load carrying hub are transferred to a generator, either via a gear arrangement or directly, in the case that the wind turbine is of a so-called direct drive type. In the generator, electrical energy is generated, which may be supplied to a power grid.

Some wind turbines are provided with two or more energy generating units in order to increase the total power produced by the wind turbine, without having to provide the wind turbine with one very large, and therefore heavy, energy generating unit. Such wind turbines are sometimes referred to as 'multirotor wind turbines'.

Traditional horizontal axis wind turbines sometimes utilise the roof of the energy generating unit as platform for hoisting spare parts to and from the energy generating unit. Sometimes, the roof is used also as a landing platform for a helicopter.

Since the major part of the assembly and service work on a wind turbine is carried out on the drive train and components thereof, the roof of the energy generating unit is a natural choice for establishing access to the wind turbine for helicopters or drones or for hoisting spare parts to and from the wind turbine. Not least on off-shore installations, such a platform may provide easy and safe access to the energy generating unit.

In multirotor wind turbines the energy generating units may be carried by a load carrying structure which is, in turn, connected to a tower via a yaw bearing structure. An example of such a wind turbine is shown in WO 2017/178026 A1.

In such wind turbines, centre of gravity of the energy generating units is displaced with respect to a longitudinal, vertical axis defined by the tower. Due to the displacement, the roof of the energy generating units may become unsuitable as a platform for hoisting or landing purpose.

### DESCRIPTION

It is an object of embodiments of the invention to provide a multirotor wind turbine with improved access for spare parts and personnel. It is a further object of embodiments to provide improved strength of a multirotor structure and to increase safety relative to helicopter operations near a wind turbine.

According to a first aspect, herein is disclosed a multirotor wind turbine comprising:
- a tower extending in a vertical direction from a tower bottom to a tower top;
- at least two energy generating units, each energy generating unit holding a rotor defining a rotor plane, and each energy generating unit comprising a drive train driven by the rotor, and
- a load carrying structure extending transverse to the vertical direction and arranged to carry the at least two energy generating units (5), the load carrying structure being carried rotationally by the tower via a yaw arrangement,
the multirotor wind turbine further comprising a platform forming an upwards facing plane working surface, particularly a platform being remote from the energy generating unit.

The working surface defines a working area where personnel can receive parts being lowered from a helicopter or from a drone, or it defines a working area where a helicopter or a drone can land.

In the following, helicopters, drones, or any similar flying objects configured for transport of personnel and/or parts to and from a platform is generally referred to as vehicle.

When the platform is remote from the energy generating unit, the risk of collision between the rotor and the vehicle is reduced. Further, the risk of fire, explosion, or other potentially hazardous malfunctioning of the wind turbine is higher in, or near, the energy generating unit, and when the platform is remote from the energy generating unit, it increases the potential for the platform to be used during escape from a malfunctioning or burning wind turbine.

The working surface may particularly be formed as a receiving platform with an area which is at least 1-2 square meters large to enable receipt of parts which are lowered. Such a platform may have a surrounding fence

The working surface may alternatively be formed as a landing platform with an area of at least 10 square meters and not having an upwards fence but rather an outwards or slightly downwards safety net surrounding the working surface.

The platform may also include a reconfigurable fence having at least a lowered and a raised configuration where the fence projects over the working surface in the raised configuration and is at or below the working surface in the lowered configuration. In that way, the platform can change between being suitable as a working platform and being suitable as a landing platform.

In the present context the term 'multirotor wind turbine' should be interpreted to mean a wind turbine comprising two or more energy generating units mounted on one tower.

In the present context the term 'energy generating unit' should be interpreted as a nacelle, a rotor with blades, and a drive train. The drive train may include a shaft connecting the rotor to a generator, and optionally also include a gearbox between the rotor and the generator. In a direct driven wind turbine, the drive train may only be constituted by the rotor part of the generator. Parts of the drive train are typically inside the nacelle. According to the invention, at least a part of an energy generating unit is attached to the frame. This part could e.g. be the nacelle including or excluding the drive train inside the nacelle, the rotor including or excluding the blades, or it could be the complete energy generating unit.

By definition herein, the direction facing the front of the rotor plane, i.e. the direction of the wind is called downstream direction, and the opposite direction from the nacelle towards the rear of the rotor plane is called upstream direction.

The energy generating unit could be configured to face the rotor plane against the wind, i.e. a so called upstream units or it could be configured to face the nacelle against the wind and the rotor away from the wind, i.e. a so called downstream units.

In the present context, the term 'tower' should be interpreted to mean a substantially vertical structure, arranged to carry the energy generating units of the multirotor wind turbine via at least one load carrying structure.

In addition to the claimed load carrying structure with at least one energy generating unit, one or more additional energy generating units may be mounted directly on the tower. The tower may comprise a number of tower segments, which are assembled to form the tower.

A single tower may carry one, two, or more load carrying structures. Each load carrying structure may be supported by one or more towers, e.g. arranged such that more towers are connected by a load carrying structure extending between the towers.

Each load carrying structure may carry at least two energy generating units, e.g. three, four, five or six energy generating units. For this purpose, the load carrying structure may e.g. have a triangular, quadrangular, pentagonal or hexagonal outer contour, or it may stretch out far from the tower in different directions and have several energy generating units attached in rows extending away from the tower.

The working surface could be offset in horizontal direction relative to the energy generating units in such a way that the energy generating unit is at least partly outside the outer contour of the platform when seen in a top view in the direction from the tower top to the tower bottom. Preferably the distance between the outer contour of the energy generating units and the platform is at least equal to the length of the blades of the energy generating units such that the distance between the outer contour of one energy generating unit and the platform is at least equal to the length of the blades of that energy generating unit. In one embodiment, the distance between the outer contour of the energy generating units and the platform is at least equal to half of the distance between two energy generating units which are on opposite sides of the tower.

According to the invention the platform is located above the tower top.

The platform could be placed in an altitude which is higher than the altitude of the energy generating units, e.g. at an altitude which is higher than the highest mounted energy generating unit. The vertical distance, defined as the difference in altitude of the highest mounted energy generating unit and the platform could be at least equal to the length of the blades of the energy generating unit.

The working surface could also be offset in horizontal direction relative to the rotor planes of one or of all energy generating units in such a way that all rotor planes are at least partly outside the outer contour of the platform when seen in a top view in the direction from the tower top to the tower bottom. Even though this may not necessarily be a requirement for safe landing, e.g. if the platform is at a much higher altitude, it may increase safety further.

By "centre of the platform" is herein meant the geometrical centre. If the platform is circular, the centre of the platform is the centre of circle. If the platform has other shapes, the centre is the arithmetic mean position of all the points in the two dimensional shape of the working surface of the platform, i.e. the mean position of all the points in in an XY-coordinate system in the plane of the working surface.

The platform could be arranged symmetrically between two rotor planes when seen in a top view in the direction from the tower top to the tower bottom. The symmetry means that one rotor plane can be mirrored onto another rotor plane by a mirror plane through the centre of the platform.

According to the invention, the working surface is offset in a horizontal plane relative to tower in such a way that the working surface is asymmetric relative to the tower top. By asymmetric is herein meant that the geometric centre of the working surface is offset relative to the geometric centre of a cross section transverse to the tower at the tower top.

As a result of the asymmetry, a front point of the outer periphery of the platform may be behind the corresponding front point of the periphery of the tower top cross section in the direction from the rotor plane along the rotor axes and rearwards away from the rotor planes. The distance between the front points in the rearward direction could be anything above zero such as 10, 20, 30, 40, 50, 60 or more percent of the largest dimension of the platform.

An opposite asymmetry can also be applied, i.e. instead of the front point of the outer periphery of the platform being behind the corresponding front point of the periphery of the tower top cross section, the front point of the outer periphery of the platform could be in front of the corresponding front point of the periphery of the tower top cross section in the direction towards the rotor planes.

The offset could particularly be to the extent where the tower top is at least partly outside the outer contour of the platform when seen in a top view in the direction from the tower top to the tower bottom. The offset could particularly be to the extent where the centre of the platform is outside the outer contour of the tower top.

The offset may enable improved access to the tower and prevent that the platform prevents access to the upper tower parts.

On a wind turbine with upstream units, the platform may be offset in the downstream direction, and on downstream units, the platform may be offset in the upstream direction to thereby bring the platform further away from rotor plane and thus increase safety.

To increase safety, the distance from the platform to the tower could be smaller than a distance from the platform to the energy generating structures. Particularly, the tower top could be at least partly within the outer contour of the platform when seen in a top view in the direction from the tower top to the tower bottom. I.e. the platform could be directly at the tower top.

The tower top could be at a higher altitude than at least a part of the energy generating units, e.g. at a higher altitude than the hub of the energy generating unit, herein referred to as hub-height. According to the invention the platform is at a higher altitude than the tower top, e.g. such that the platform defines the highest point of the wind turbine.

The platform may be integrated in structural components of the tower. By structural components of the tower is herein meant those parts of the tower which provides play a role in providing the structural rigidity and strength which is required for the tower. The tower comprises a plurality of such structural components which are designed, engineered and manufactured under controlled conditions for a specific purpose with respect to strength and rigidity and considering a specific load situation.

The platform may e.g. be structurally connected to at least a part of the load carrying structure, and/or the platform may be structurally connected to the tower top.

The load carrying structure may comprise:
- a load carrying hub rotationally carried by the tower via the yaw arrangement;
- a first load carrying arrangement extending outwards on a left side of the load carrying hub; and
- a second load carrying arrangement extending outwards on a right side of the load carrying hub;
each load carrying arrangement may comprise a primary structure attached to the load carrying hub in a lower interface and extending between the lower interface and a corresponding one of the at least two energy generating units. Accordingly, each load carrying arrangement is arranged to handle the loads involved with carrying their respective energy generating unit(s). Furthermore, the load carrying arrangements may advantageously be arranged on opposing sides of the tower, in order to balance forces and loads with respect to the tower.

Each load carrying arrangement may comprise a tension arrangement, the tension arrangement may comprise at least one secondary structure attached to the load carrying hub in an upper interface and extending above the primary structure between the upper interface and the corresponding one of the at least two energy generating units such that gravity acting on the energy generating units causes compression of the primary structure and tension in the at least one secondary structure.

Particularly, each load carrying arrangement may comprise a primary structure and at least two secondary structures, i.e. the tension arrangement may comprise:
- a forward secondary structure attached to the load carrying hub in a forward point of the upper interface and extending above the primary structure between the forward point and the corresponding one of the at least two energy generating units, and
- a rearward secondary structure attached to the load carrying hub in a rearward point of the upper interface and extending above the primary structure between the rearward point and the corresponding one of the at least two energy generating units,
where the forward point and rearward point are on opposite sides of the right side or left side of load . Preferably, the axes defined by the primary structure and the two secondary structures are not arranged in the same plane, thereby defining a three-dimensional carrying structure.

This design has the consequence, that when gravity acts on the energy generating unit, this causes push in the primary structures and pull in the secondary structures. This causes the secondary structures to be preloaded, due to gravity acting on the energy generating units. The preloading of the secondary structures ensures that these structures are capable of handling loads originating from thrust of the energy generating units. In particular, since the secondary structures extend on opposing sides of the primary structure, i.e. the forward secondary structure on one side and the rearward secondary structure on the other side of the primary structure, thrust loads acting in one direction will increase the pull in a first secondary structure and decrease the pull in the second secondary structure, while thrust loads acting in an opposite direction will decrease the pull in the first secondary structure and increase the pull in the second secondary structure. However, the preload in the secondary structures ensures that a certain pull remains in each of the secondary structures, also when the pull is decreased, due to the thrust loads. The two opposing directions could, e.g., be the direction of the incoming wind and the opposite direction. This specific layout and the load handling supported thereby is advantageous in connection with the platform. When the platform is structurally connected to at least a part of the load carrying structure, the platform may provide increased strength e.g. by increasing the distance between the forward and rearward secondary structures.

The platform could be connected to at least one of the primary structures, it could be connected to at least one of the secondary structures, or the platform could form part of an upper interface connecting the at least one secondary structure to the load carrying hub

The load carrying structure may advantageously be designed in such a manner that collisions between the wind turbine blades of the energy generating units on the one hand, and the primary and secondary structures and the tower, on the other hand, are avoided. For instance, the primary structures may extend from the tower in a slightly forward direction, i.e. into the incoming wind, thereby positioning the wind turbine blades in front of the tower. This also allows the secondary structures, extending on opposing sides of the primary structures, to be attached to the tower at a position behind the position of the wind turbine blades. At the same time, this will position the platform away from the rotor planes if it is placed between forward and rearward secondary structures.

Accordingly, the platform may be closer to one of the forward secondary structure and rearward secondary structure than to the other one of the forward secondary structure and rearward secondary structure.

One of the forward secondary structure and rearward secondary structure could be connected to the platform and the other one of the forward secondary structure and rearward secondary structure could be connected to the load carrying hub.

In one embodiment, the platform is connected to both the forward secondary structure and to the rearward secondary structure.

Accordingly, the platform may extend between the forward and the rearward secondary structures and thus provide an increased distance between the forward and the rearward secondary structure.

It is not ruled out that a single tower may have two or more load carrying structures of the kind described above mounted thereon. In this case the load carrying structures may advantageously be arranged one above the other along the length of the tower.

Each primary structure may be in the form of one or more compression bars. Compression bars are suitable for receiving push. The compression bars could, e.g., be in the form of tubes, rods, beams, such as I-beams, etc.

At least the working surface of the platform could be movable relative to the load carrying structure and fixed relative to the tower such that the working surface becomes fixed and does not rotate with the yaw movement of the wind turbine. This may enable a more stable working platform and improve the conditions for landing with a vehicle.

Alternatively, at least the working surface of the platform is fixed relative to the load carrying structure and movable relative to the tower. That may enable steady conditions on the working surface with respect to the wind direction, i.e. the wind direction is always from the same direction relative to the working surface.

To facilitate access between the working surface and other areas of the wind turbine, the wind turbine may comprise an elevator, e.g. an elevator driving in the tower between different points of access. One point of access could be at a hatch at the tower bottom, one point of access could be at the place where the load carrying structure interface the tower, and one point of access could be at the platform, e.g. at the working surface.

If the platform is offset relative to the tower, the point of access at the working surface could be at the edge of the working surface. If the platform is directly above the tower top, the point of access at the working surface could be through a hole in the working surface.

The wind turbine may comprise a working passage extending from the working surface to the energy generating unit and allowing personnel to move between the nacelle and the working surface in a protected manner. The working passage may include passage sections extending inside the tower and/or inside the primary structure to allow further protection during use of the passage.

The wind turbine may comprise a hoisting device located at the platform and configured for hoisting and lowering of items from the working surface to and from a lower location of the wind turbine. Particularly, the hoisting device may be configured for moving items from the working surface to at least one of the energy generating units. The hoisting device may e.g. be in the form of a crane, e.g. a tower crane, and it may have an outrigger arm which is extendable to allow movement of the handled item in a direction being perpendicular to the vertical direction of the tower.

The wind turbine may comprise switchgear, power converter, and similar electrical components configured for connecting the generators of the energy generating units to a power grid. Herein the term "electrical connection equipment incudes converters, transformers, inverters, switch gear and peripheral equipment e.g. for cooling the aforementioned components.

In one embodiment, the multirotor wind turbine comprises one or more sets of electrical connection equipment at the tower top beneath the platform. The multirotor wind turbine may e.g. comprise one set of electrical connection equipment for each energy generating unit, or it may comprise one mutual set of electrical connection equipment for all energy generating units.

The electrical connection equipment can be located in the tower below the working surface, or the electrical connection equipment can be located outside the tower, e.g. suspended on the side of the tower, beneath the platform.

The electrical connection equipment may particularly be accessible through the working surface. For that purpose, the working surface may comprise an opening through which the electrical connection equipment can be accessed.

The location of the electrical connection equipment beneath the platform facilitates easy access to service and replacement by use of flying vehicles, and the location at the top of the tower may increase safety and allow rescue of personal to the ground in case of fire in the electrical connection equipment. Further, the location of the electrical connection equipment at the tower top may reduce electrical loss and provide a more efficient energy production. Additionally, the location at the tower top below the platform may increase balance in the tower and reduce the complexity and dimensions of the load carrying structure.

The electrical connection equipment referred to herein could particularly be for 33, 66 or 132 KVolt.

The rotor of the multirotor wind turbine may particularly comprise a set of rotor blades, particularly three blades. The multirotor wind turbine may further comprise a rotor locking structure configured to lock rotation of the rotor in a position where one blade extends in a direction from the energy generating unit towards a lower surface of the platform. e.g. pointing in a horizontal direction.

The multirotor wind turbine may particularly comprise a coordinating locking structure configured to operate on two adjacent energy generating units to lock the rotor of both units such that at least one blade of each unit points towards a blade of the other unit. This may particularly be a position where both blades are horizontal.

In a second aspect, a method of suspending a platform on a multirotor wind turbine is disclosed. The method relates to a wind turbine comprising
- a tower extending in a vertical direction from a tower bottom to a tower top;
- a load carrying structure extending transverse to the vertical direction and arranged to carry at least two energy generating units, the load carrying structure being carried rotationally by the tower via a yaw arrangement.

According to the method, the platform is arranged offset in a direction perpendicular to the vertical direction relative to the energy generating units. The load carrying structure could be provided in accordance with the wind turbine of the first aspect of the invention, and the platform could be connected to at least one of the secondary structures. Particularly, it could be placed between the rearward and forward secondary structure to thereby increase the distance between these structures and improve the strength and stability of the load carrying structure. The method according to the second aspect may imply the use of any of the structures disclosed relative to the first aspect of the disclosure.

In a third aspect, the invention provides a method for bringing spare parts and personnel to and from a multirotor wind turbine according to claim 1, the method comprising landing a flying vehicle on the working surface.

The method may particularly be used for rescue of persons from the multirotor wind turbine, e.g. in case of fire etc.

Further, the method may particularly be applied for servicing or replacement of electrical connection equipment.

### BRIEF DESCRIPTION OF THE DRAWl NGS

The invention will now be described in further detail with reference to the accompanying drawings in which:
Fig. 1 is a front view of a multirotor wind turbine comprising two load carrying structures according to an embodiment of the invention,
Fig. 2 is a side view of the multirotor wind turbine of Fig. 1,
Fig. 3 is a top view of the multirotor wind turbine of Figs. 1 and 2,
Figs. 4-7 show details of different embodiments of the multirotor wind turbine,
Fig. 8 illustrates that the rotor planes are outside the contour of the platform, and
Figs. 9-10 illustrate different properties of asymmetry between the platform and the tower top cross section.

### DETAILED DESCRIPTION OF THE DRAWINGS

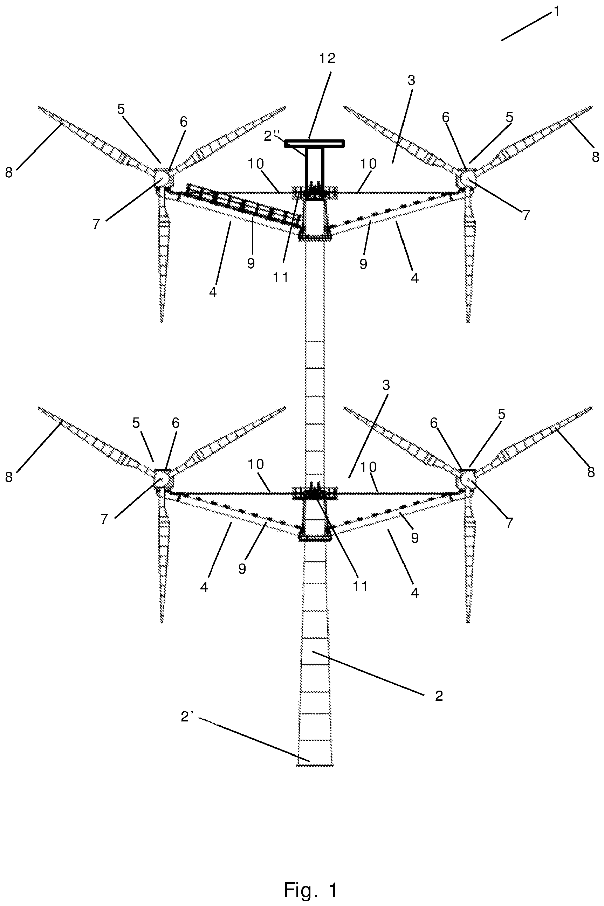

Fig. 1 is a front view of a multirotor wind turbine 1 comprising a tower 2 carrying two load carrying structures 3 according to an embodiment of the invention. The load carrying structures 3 are arranged, one above the other, along the length of the tower 2.

Each load carrying structure 3 comprises two load carrying arrangements 4, extending away from the tower 2 on opposite sides of the tower 2, as seen from the viewing angle of Fig. 1. Each load carrying arrangement 4 carries an energy generating unit 5, and each energy generating unit 5 comprises a nacelle 6 and a rotor 7 carrying three wind turbine blades 8.

Each load carrying arrangement 4 comprises a primary structure 9, in the form of a tube, and two secondary structures 10, in the form of double wires. In Fig. 1, only one of the secondary structures 10 for each load carrying arrangement 4 is visible.

The primary structures 9 extend away from the tower 2 along a direction which forms an acute angle with respect to a substantially vertical longitudinal axis defined by the tower 2. Thereby the primary structures 9 extend away from the tower 2 along an inclined upwards direction.

The secondary structures 10 extend away from the tower 2 along a direction which is substantially perpendicular to the substantially vertical longitudinal axis defined by the tower 2. Thereby the secondary structures 10 extend away from the tower 2 along a substantially horizontal direction. Accordingly, an angle is defined between the direction in which primary structure 9 of a given load carrying arrangement 4 extends, and the plane in which the secondary structures 10 of the load carrying arrangement 4 extend.

The primary structures 9 and the secondary structures 10 are attached to the tower 2 via a yaw arrangement 11, allowing the entire load carrying structure 3 to perform yawing movements with respect to the tower 2 in order to direct the rotors 7 into the incoming wind.

The multirotor wind turbine further comprising a platform 12 forming an upwards facing plane working surface
The primary structures 9 of a given load carrying structure 3 and the secondary structures 10 of the load carrying structure 3 are attached to the tower 2 at separate positions along the length of the tower 2.

When gravity acts on the energy generating units 5, the mutual positions of the primary structures 9 and the secondary structures 10 causes push in the primary structures 9 and pull in the secondary structures 10. Thereby a preload is introduced in the secondary structures 10, due to the gravity acting on the energy generating units 5.

During operation of the multirotor wind turbine 1, thrust forces will act on the energy generating units 5, in the direction of the incoming wind or in the opposite direction. When this occurs, the pull in one of the secondary structures 10 of each of the load carrying arrangements 4 is decreased while the pull in the other secondary structure 10 is increased. However, the preload introduced in the secondary structures 10, due to gravity acting on the energy generating units 5, is sufficiently high to ensure that the secondary structure 10, in which the pull is decreased, remains tight. Accordingly, the load carrying structure 1 is capable of handling the thrust forces introduced during operation of the multirotor wind turbine 1.

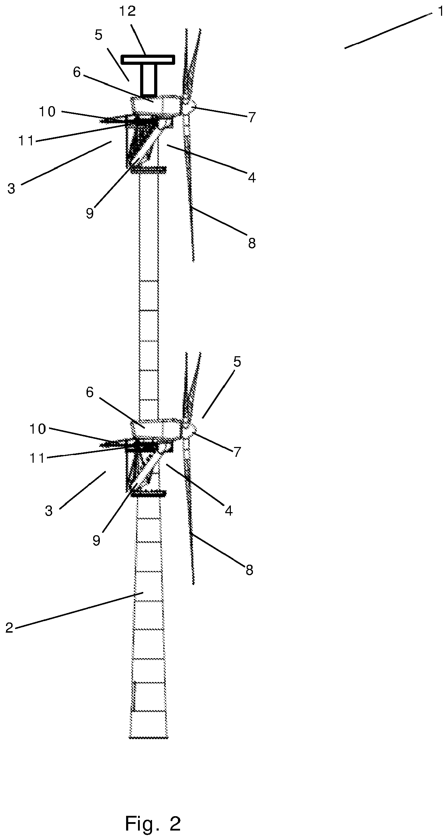

Fig. 2 is a side view of the multirotor wind turbine 1 of Fig. 1. It can be seen in Fig. 2 that the primary structures 9 extend from a position behind the tower 2 to a position in front of the tower 2, thereby positioning the rotors 7 of the energy generating units 5 in front of the tower 2, and facing the incoming wind.

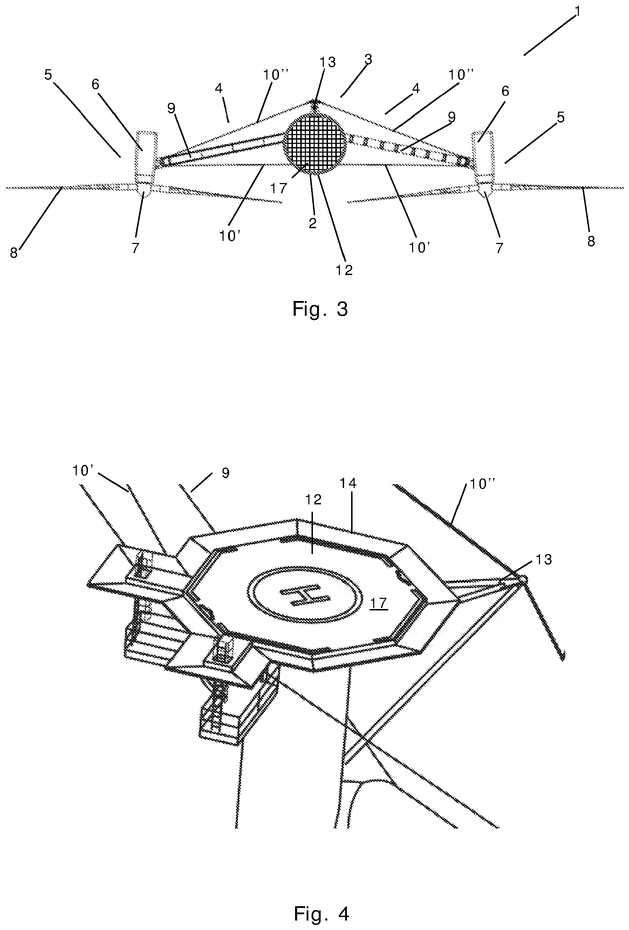

It can further be seen that one of the secondary structures 10 of each load carrying arrangement 4 extends from an attachment point behind the tower 2 to the position of the energy generating unit 5. This will be described in further detail below with reference to Fig. 3.

Fig. 3 is a top view of the multirotor wind turbine 1 of Figs. 1 and 2. In Fig. 3 it can be seen that the platform 12 is offset in horizontal direction relative to the rotor planes 19, i.e. it is located at a distance behind the rotor planes.

Each load carrying arrangement 4 comprises two secondary structures 10', 10"extending on opposing sides of the primary structure 9 from the position of the energy generating unit 5 to respective attachment points at the tower 2. This, combined with the fact that the primary structures 9 extend in an inclined upwards direction, as described above with reference to Fig. 1, has the consequence that the primary structure 9 and the secondary structures 10 of each load carrying arrangement 4 form a three-dimensional structure, which ensures that an appropriate preload is introduced in the secondary structures 10, due to gravity acting on the energy generating unit 5.

The working surface 17 of the platform 12 is made with an open structure allowing wind to blow through the surface. This improves the landing conditions for a vehicle.

For each load carrying arrangement 4, one of the secondary structures 10', 10" is attached to the tower 2 at a rearward point via the spacer 13 and via the platform 12 to which the spacer 13 is attached. In the illustrated embodiment, the platform is displaced rearward relative to the tower and it increases the distance from the tower 2 to the rearward secondary structure 10". The other, forward, secondary structure 10' is attached to the tower 2 via a forward point on the platform 12 at a position in front of the tower 2 and closer to the tower 2 than the rearward secondary structure 10". As described above with reference to Fig. 2, the primary structure 9 extends from a position behind the tower 2 to a position in front of the tower 2. This allows the rotor 7 of each of the energy generating units 5 to be arranged in front of the tower 2, and in front of the primary structure 9 and both of the secondary structures 10. Thereby the wind turbine blades 8 are kept clear from not only the load carrying structure 3 but also from the platform 12, and the risk of collision is minimised.

Fig. 4 illustrates in further details the forward and rearward attachment points via the platform 12 to thereby provide an increased distance between the forward and rearward secondary structures 10', 10". The illustrated platform is plane had forms an outwards, and slightly downwards fence 14 making the working surface suitable for landing with a vehicle.

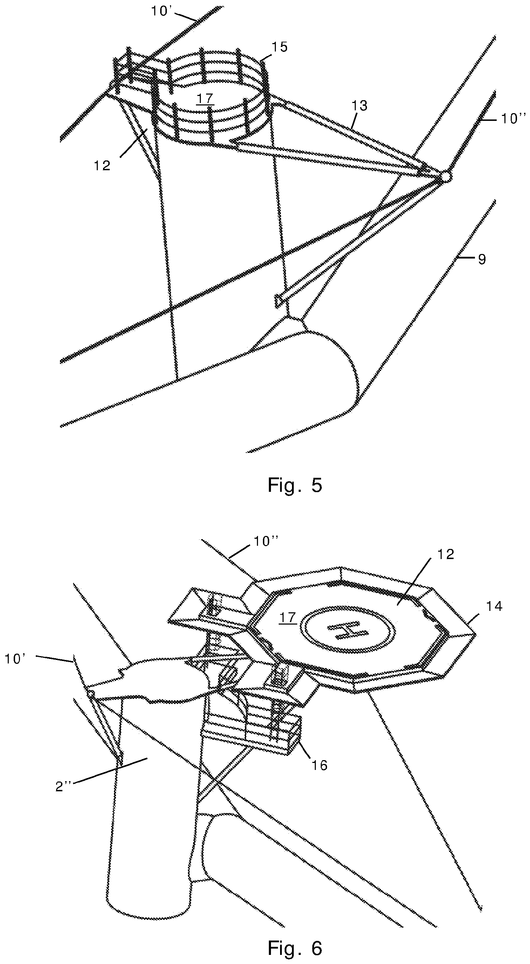

Fig. 5 illustrates an alternative embodiment of the wind turbine, where the platform includes an upwards fence 15 making the working surface suitable for personnel to work and receive objects which are hoisted down from a vehicle above the wind turbine. Again, the rearward secondary structure 10" is attached to the tower 2 via a spacer 13 and via the platform 12, and the forward secondary structure 10' is attached to the tower 2 via the platform 12.

Fig. 6 illustrates an alternative embodiment, wherein the working surface forms a landing surface for a vehicle. In this embodiment, the working surface is asymmetric relative to the tower top, i.e. it has a geometric centre which is offset in horizontal direction relative to tower. In the illustrated embodiment, the offset has a size whereby in such a way that the tower top is completely outside the outer contour of the working surface when seen in a top view in the direction from the tower top to the tower bottom. In this embodiment, the rearward secondary structure 10" is fixed to, and extends below the working surface. The illustrated platform 12 includes a passage bridge 16 allowing access for personnel between the interior of the tower 2 and the working surface 17.

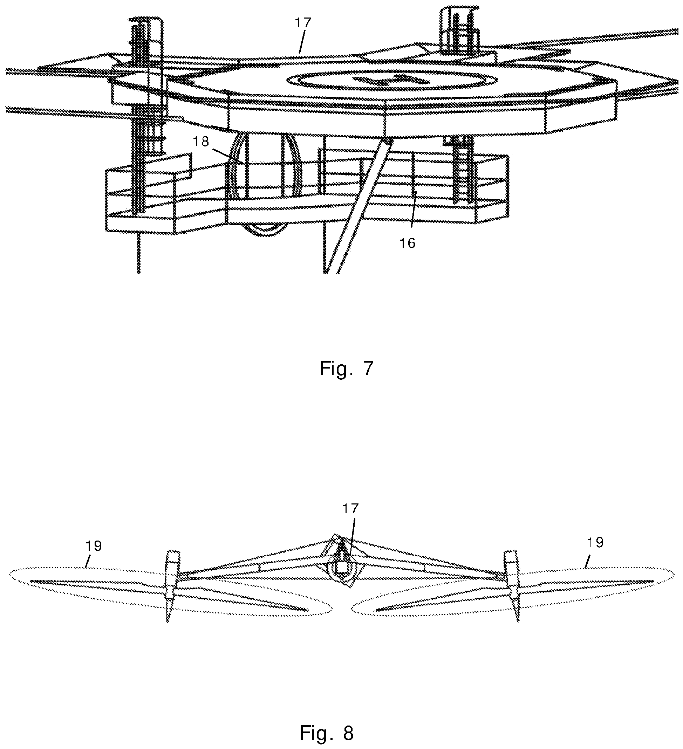

Fig. 7 illustrates further details of the passage bridge 16 and the entrance opening 18 allowing entrance from the access bridge 16 into the tower 2.

Fig. 8 illustrates a top view of an embodiment where the working surface 17 is offset in horizontal direction relative to the rotor planes 19 of the energy generating units 5 such that all rotor planes are at least partly outside the outer contour of the platform.

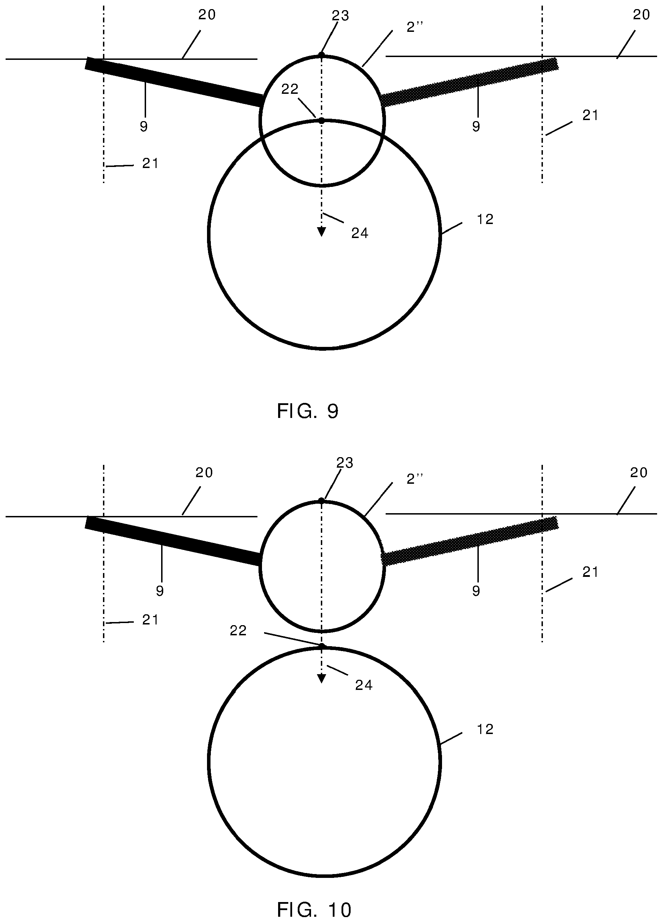

Figs. 9 and 10 illustrate details of asymmetry between the tower cross section and the platform. Both Fig. 9 and Fig. 10 illustrate the wind turbine seen from above and Fig. 8 illustrates an embodiment where the contour of the platform 12 overlaps the contour of the tower top 2". Fig. 9 illustrates an embodiment where the contour of the platform 12 does not overlap the contour of the tower top 2".

The illustrated wind turbine has blades forming a rotor plane 20 by rotation of blades around the rotor axes 21, and in both embodiments the platform 12 is asymmetric in the direction away from the rotor planes 20, and in both embodiments, the platform 12 is completely within the borders defined on right and left sides by the rotor exes 21.

The platform 12 is asymmetric relative to the tower top 2" which means that the geometrical centre of the platform 12 is shifted relative to the geometric centre of the cross section of the tower top.

In both Fig. 9 and 10, a front point 22 of the outer periphery of the platform 12 is behind the corresponding front point 23 of the periphery of the tower top cross section in the direction of the arrow 24, i.e. in the direction from the rotor plane 20 along the rotor axes 21 and rearwards. The distance between the front points 22 and 23 in the direction of the arrow 24 could be anything above zero such as 10, 20, 30, 40, 50, 60 or more percent of the largest dimension of the platform.

An opposite asymmetry can also be applied, i.e. instead of the front point 22 of the outer periphery of the platform 12 being behind the corresponding front point 23 of the periphery of the tower top cross section in the direction of the arrow 24, the front point 22 of the outer periphery of the platform 12 is in front of the corresponding front point 23 of the periphery of the tower top cross section in the direction opposite the arrow 24. Again, the distance between the front points 22 and 23 in the direction opposite the arrow 24 could be anything above zero such as 10, 20, 30, 40, 50, 60 or more percent of the largest dimension of the platform.

## Claims

1. A multirotor wind turbine (1) comprising:
- a tower (2) extending in a vertical direction from a tower bottom (2') to a tower top (2");
- at least two energy generating units (5), each energy generating unit (5) holding a rotor (7) defining a rotor plane (19), and each energy generating unit comprising a drive train driven by the rotor, and
- a load carrying structure (3) extending transverse to the vertical direction and arranged to carry the at least two energy generating units (5), the load carrying structure being carried rotationally by the tower via a yaw arrangement (11),
the multirotor wind turbine further comprising a platform (12) forming an upwards facing plane working surface (17) above the tower top (2"), wherein the working surface is asymmetric relative to the tower top to thereby define an offset in horizontal direction between the geometric centre of the working surface and the geometric centre of a cross section transverse to the tower top.

2. The multirotor wind turbine according to claim 1, wherein the offset is of a size whereby the tower top (2") is at least partly outside the outer contour of the working surface when seen in a top view in the direction from the tower top (2") to the tower bottom (2').

3. The multirotor wind turbine according to any of the preceding claims, wherein a distance from the platform (12) to the tower is smaller than a distance from the platform to the energy generating units (5).

4. The multirotor wind turbine (1) according to any of the preceding claims, wherein the energy generating unit defines a hub-height, and the tower top (2") is at a higher altitude than the hub-height, and the platform is at a higher altitude than the tower top (2").

5. The multirotor wind turbine according to any of the preceding claims, wherein the platform (12) is structurally connected to at least a part (10") of the load carrying structure (3).

6. The multirotor wind turbine according to any of the preceding claims, wherein the platform (12) is structurally connected to the tower top (2").

7. The multirotor wind turbine (1) according to any of the preceding claims, wherein the load carrying structure (3) comprises:
- a load carrying hub rotationally carried by the tower via the yaw arrangement (11);
- a first load carrying arrangement (9, 10) extending outwards on a left side of the load carrying hub; and
- a second load carrying arrangement (9, 10) extending outwards on a right side of the load carrying hub;
each load carrying arrangement (9, 10) comprising a primary structure (9) attached to the load carrying hub in a lower interface and extending between the lower interface and a corresponding one of the at least two energy generating units.

8. The multirotor wind turbine (1) according to claim 7, wherein each load carrying arrangement (9, 10) comprises a tension arrangement, the tension arrangement comprising at least one secondary structure (10) attached to the load carrying hub in an upper interface and extending above the primary structure (9) between the upper interface and the corresponding one of the at least two energy generating units (5) such that gravity acting on the energy generating units (5) causes compression of the primary structure (9) and tension in the at least one secondary structure (10).

9. The multirotor wind turbine (1) according to claim 8, wherein the tension arrangement comprises:
- a forward secondary structure (10') attached to the load carrying hub in a forward point of the upper interface and extending above the primary structure (9) between the forward point and the corresponding one of the at least two energy generating units (5), and
- a rearward secondary structure (10") attached to the load carrying hub in a rearward point of the upper interface and extending above the primary structure (9) between the rearward point and the corresponding one of the at least two energy generating units (5),
where the forward point and rearward point are on opposite sides of the right side or left side of load carrying hub.

10. The multirotor wind turbine (1) according to any of claim 7-9, wherein the platform is connected to at least one of the primary structures (9).

11. The multirotor wind turbine (1) according to claim 8-10, wherein the platform is connected to at least one of the secondary structures (10', 10").

12. The multirotor wind turbine according to claim 11, wherein the upper interface (13) connecting the at least one secondary structure to the load carrying hub forms part of the platform.

13. The multirotor wind turbine (1) according to claim 9-12, wherein the platform is closer to one of the forward secondary structure and rearward secondary structure than to the other one of the forward secondary structure and rearward secondary structure.

14. The multirotor wind turbine (1) according to claim 9-13, wherein one of the forward secondary structure (10') and rearward secondary structure (10") is connected to the platform (12) and the other one of the forward secondary structure and rearward secondary structure is connected to the load carrying hub.

15. The multirotor wind turbine (1) according to claim 9-13, wherein the platform (12) is connected to both the forward secondary structure (10') and to the rearward secondary structure (10").

## Patentansprüche

1. Multirotor-Windkraftanlage (1), die Folgendes umfasst:
- einen Turm (2), der sich in vertikaler Richtung von einem Turmboden (2') zu einer Turmoberseite (2") erstreckt;
- mindestens zwei Energieerzeugungseinheiten (5), wobei jede Energieerzeugungseinheit (5) einen Rotor (7) hält, der eine Rotorebene (19) definiert, und jede Energieerzeugungseinheit einen durch den Rotor angetriebenen Antriebsstrang umfasst, und
- eine lasttragende Struktur (3), die sich quer zur vertikalen Richtung erstreckt und dazu eingerichtet ist, die mindestens zwei Energieerzeugungseinheiten (5) zu tragen, wobei die lasttragende Struktur vom Turm über eine Gieranordnung (11) drehbar getragen wird,
wobei die Multirotor-Windkraftanlage weiter eine Plattform (12) umfasst, die eine nach oben weisende ebene Arbeitsfläche (17) oberhalb der Turmoberseite (2") bildet, wobei die Arbeitsfläche relativ zur Turmoberseite asymmetrisch ist, um dadurch einen Versatz in horizontaler Richtung zwischen dem geometrischen Mittelpunkt der Arbeitsfläche und dem geometrischen Mittelpunkt eines Querschnitts quer zur Turmoberseite zu definieren.

2. Multirotor-Windkraftanlage nach Anspruch 1, wobei der Versatz eine Größe aufweist, wodurch die Turmoberseite (2") in der Draufsicht in der Richtung von der Turmoberseite (2") zum Turmboden (2') gesehen zumindest teilweise außerhalb der Außenkontur der Arbeitsfläche liegt.

3. Multirotor-Windkraftanlage nach einem der vorstehenden Ansprüche, wobei ein Abstand von der Plattform (12) zum Turm kleiner ist als ein Abstand von der Plattform zu den Energieerzeugungseinheiten (5).

4. Multirotor-Windkraftanlage (1) nach einem der vorstehenden Ansprüche, wobei die Energieerzeugungseinheit eine Nabenhöhe definiert, und die Turmoberseite (2") sich auf einer höheren Höhe befindet als die Nabenhöhe, und die Plattform sich auf einer höheren Höhe befindet als die Turmoberseite (2").

5. Multirotor-Windkraftanlage nach einem der vorstehenden Ansprüche, wobei die Plattform (12) mit zumindest einem Teil (10") der lasttragenden Struktur (3) strukturell verbunden ist.

6. Multirotor-Windkraftanlage nach einem der vorstehenden Ansprüche, wobei die Plattform (12) mit der Turmoberseite (2") strukturell verbunden ist.

7. Multirotor-Windkraftanlage (1) nach einem der vorstehenden Ansprüche, wobei die lasttragende Struktur (3) Folgendes umfasst:
- eine lasttragende Nabe, die vom Turm über die Gieranordnung (11) drehbar getragen wird;
- eine erste lasttragende Anordnung (9, 10), die sich auf einer linken Seite der lasttragenden Nabe auswärts erstreckt; und
- eine zweite lasttragende Anordnung (9, 10), die sich auf einer rechten Seite der lasttragenden Nabe auswärts erstreckt;
wobei jede lasttragende Anordnung (9, 10) eine Primärstruktur (9) umfasst, die an der lasttragenden Nabe an einer unteren Grenzfläche befestigt ist und sich zwischen der unteren Grenzfläche und einer entsprechenden der mindestens zwei Energieerzeugungseinheiten erstreckt.

8. Multirotor-Windkraftanlage (1) nach Anspruch 7, wobei jede lasttragende Anordnung (9, 10) eine Zuganordnung umfasst, wobei die Zuganordnung mindestens eine Sekundärstruktur (10) umfasst, die an der lasttragenden Nabe an einer oberen Grenzfläche befestigt ist und sich oberhalb der Primärstruktur (9) zwischen der oberen Grenzfläche und der entsprechenden der mindestens zwei Energieerzeugungseinheiten (5) erstreckt, sodass die Schwerkraft, die auf die Energieerzeugungseinheiten (5) einwirkt, eine Kompression der Primärstruktur (9) und eine Zugspannung in der mindestens einen Sekundärstruktur (10) bewirkt.

9. Multirotor-Windkraftanlage (1) nach Anspruch 8, wobei die Zuganordnung Folgendes umfasst:
- eine vordere Sekundärstruktur (10'), die an der lasttragenden Nabe an einem vorderen Punkt der oberen Grenzfläche befestigt ist und sich oberhalb der Primärstruktur (9) zwischen dem vorderen Punkt und der entsprechenden der mindestens zwei Energieerzeugungseinheiten (5) erstreckt, und
- eine hintere Sekundärstruktur (10"), die an der lasttragenden Nabe an einem hinteren Punkt der oberen Grenzfläche befestigt ist und sich oberhalb der Primärstruktur (9) zwischen dem hinteren Punkt und der entsprechenden der mindestens zwei Energieerzeugungseinheiten (5) erstreckt,
wobei der vordere Punkt und der hintere Punkt auf gegenüberliegenden Seiten der rechten Seite oder der linken Seite der lasttragenden Nabe liegen.

10. Multirotor-Windkraftanlage (1) nach einem der Ansprüche 7-9, wobei die Plattform mit mindestens einer der Primärstrukturen (9) verbunden ist.

11. Multirotor-Windkraftanlage (1) nach Anspruch 8-10, wobei die Plattform mit mindestens einer der Sekundärstrukturen (10', 10") verbunden ist.

12. Multirotor-Windkraftanlage nach Anspruch 11, wobei die obere Grenzfläche (13), welche die mindestens eine Sekundärstruktur mit der lasttragenden Nabe verbindet, Teil der Plattform bildet.

13. Multirotor-Windkraftanlage (1) nach Anspruch 9-12, wobei sich die Plattform näher an einer der vorderen Sekundärstruktur und der hinteren Sekundärstruktur befindet als an der anderen der vorderen Sekundärstruktur und der hinteren Sekundärstruktur.

14. Multirotor-Windkraftanlage (1) nach Anspruch 9-13, wobei eine der vorderen Sekundärstruktur (10') und der hinteren Sekundärstruktur (10") mit der Plattform (12) verbunden ist und die andere der vorderen Sekundärstruktur und der hinteren Sekundärstruktur mit der lasttragenden Nabe verbunden ist.

15. Multirotor-Windkraftanlage (1) nach Anspruch 9-13, wobei die Plattform (12) sowohl mit der vorderen Sekundärstruktur (10') als auch mit der hinteren Sekundärstruktur (10") verbunden ist.

## Revendications

1. Éolienne à rotors multiples (1) comprenant :
- une tour (2) s'étendant dans une direction verticale depuis un bas de tour (2') à un dessus de tour (2") ;
- au moins deux unités de production d'énergie (5), chaque unité de production d'énergie (5) contenant un rotor (7) définissant un plan de rotor (19), et chaque unité de production d'énergie comprenant une transmission entraînée par le rotor, et
- une structure porteuse de charge (3) s'étendant transversalement à la direction verticale et agencée pour porter les au moins deux unités de production d'énergie (5), la structure porteuse de charge étant portée en rotation par la tour via un agencement d'orientation (11),
l'éolienne à rotors multiples comprenant en outre une plateforme (12) formant une surface de travail plane orientée vers le haut (17) au-dessus du dessus de tour (2"), dans laquelle la surface de travail est asymétrique par rapport au dessus de tour pour ainsi définir un décalage dans la direction horizontale entre le centre géométrique de la surface de travail et le centre géométrique d'une section transversale transversale au dessus de tour.

2. Éolienne à rotors multiples selon la revendication 1, dans laquelle le décalage a une taille selon laquelle le dessus de tour (2") est au moins partiellement à l'extérieur du contour externe de la surface de travail lorsqu'on l'observe dans une vue en plan dans la direction depuis le dessus de tour (2") au bas de tour (2').

3. Éolienne à rotors multiples selon l'une quelconque des revendications précédentes, dans laquelle une distance depuis la plateforme (12) jusqu'à la tour est inférieure à une distance depuis la plateforme jusqu'aux unités de production d'énergie (5).

4. Éolienne à rotors multiples (1) selon l'une quelconque des revendications précédentes, dans laquelle l'unité de production d'énergie définit une hauteur de moyeu, et le dessus de tour (2") est à une altitude supérieure à la hauteur de moyeu, et la plateforme est à une altitude supérieure au dessus de tour (2").

5. Éolienne à rotors multiples selon l'une quelconque des revendications précédentes, dans laquelle la plateforme (12) est raccordée structurellement à au moins une partie (10") de la structure porteuse de charge (3).

6. Éolienne à rotors multiples selon l'une quelconque des revendications précédentes, dans laquelle la plateforme (12) est raccordée structurellement au dessus de tour (2").

7. Éolienne à rotors multiples (1) selon l'une quelconque des revendications précédentes, dans laquelle la structure porteuse de charge (3) comprend :
- un moyeu porteur de charge porté en rotation par la tour via l'agencement d'orientation (11) ;
- un premier agencement porteur de charge (9, 10) s'étendant vers l'extérieur sur un côté gauche du moyeu porteur de charge ; et
- un second agencement porteur de charge (9, 10) s'étendant vers l'extérieur sur un côté droit du moyeu porteur de charge ;
chaque agencement porteur de charge (9, 10) comprenant une structure primaire (9) attachée au moyeu porteur de charge dans une interface inférieure et s'étendant entre l'interface inférieure et une correspondante des au moins deux unités de production d'énergie.

8. Éolienne à rotors multiples (1) selon la revendication 7, dans laquelle chaque agencement porteur de charge (9, 10) comprend un agencement de tension, l'agencement de tension comprenant au moins une structure secondaire (10) attachée au moyeu porteur de charge dans une interface supérieure et s'étendant au-dessus de la structure primaire (9) entre l'interface supérieure et la correspondante des au moins deux unités de production d'énergie (5) de sorte que la gravité agissant sur les unités de production d'énergie (5) provoque une compression de la structure primaire (9) et une tension dans la au moins une structure secondaire (10).

9. Éolienne à rotors multiples (1) selon la revendication 8, dans laquelle l'agencement de tension comprend :
- une structure secondaire avant (10') attachée au moyeu porteur de charge dans un point avant de l'interface supérieure et s'étendant au-dessus de la structure primaire (9) entre le point avant et la correspondante des au moins deux unités de production d'énergie (5), et
- une structure secondaire arrière (10") attachée au moyeu porteur de charge dans un point arrière de l'interface supérieure et s'étendant au-dessus de la structure primaire (9) entre le point arrière et la correspondante des au moins deux unités de production d'énergie (5),
où le point avant et le point arrière sont sur des côtés opposés du côté droit ou du côté gauche du moyeu porteur de charge.

10. Éolienne à rotors multiples (1) selon l'une quelconque des revendications 7-9, dans laquelle la plateforme est raccordée à au moins une des structures primaires (9).

11. Éolienne à rotors multiples (1) selon les revendications 8-10, dans laquelle la plateforme est raccordée à au moins une des structures secondaires (10', 10").

12. Éolienne à rotors multiples selon la revendication 11, dans laquelle l'interface supérieure (13) raccordant la au moins une structure secondaire au moyeu porteur de charge forme une partie de la plateforme.

13. Éolienne à rotors multiples (1) selon les revendications 9-12, dans laquelle la plateforme est plus près d'une de la structure secondaire avant et de la structure secondaire arrière que de l'autre de la structure secondaire avant et de la structure secondaire arrière.

14. Éolienne à rotors multiples (1) selon les revendications 9-13, dans laquelle une de la structure secondaire avant (10') et de la structure secondaire arrière (10") est raccordée à la plateforme (12) et l'autre de la structure secondaire avant et de la structure secondaire arrière est raccordée au moyeu porteur de charge.

15. Éolienne à rotors multiples (1) selon les revendications 9-13, dans laquelle la plateforme (12) est raccordée à la fois à la structure secondaire avant (10') et à la structure secondaire arrière (10").
